# EUROPEAN PATENT SPECIFICATION

(11) **EP 3 371 036 B1**
(45) Date of publication and mention of the grant of the patent: **18.03.2020**
(21) Application number: 16805572.1
(22) Date of filing: 03.11.2016
(51) Int. Cl.: B62D 11/24, B62D 6/00

(54) **MAINTENANCE VEHICLE**
WARTUNGSFAHRZEUG
VÉHICULE D'ENTRETIEN

(30) Priority: 04.11.2015 US 201562250755 P
(43) Date of publication of application: 12.09.2018
(73) Proprietor: MTD Products Inc., Valley City, OH 44280 (US)
(72) Inventor: SCHAEDLER, Axel, Olmsted Township, Ohio 44138 (US); EAVENSON, SR., Jimmy, N., Aurora, Ohio 44202 (US); BUCHANAN, Peter, J., Elyria, Ohio 44035 (US)
(74) Representative: Barker Brettell LLP
(86) International application number: PCT/US2016/060228
(87) International publication number: WO 2017/079370

(56) References cited:
- DE-A1- 3 217 841
- DE-A1-102013 215 425
- FR-A1- 2 720 984
- US-A1- 2005 016 304
- US-A1- 2013 056 287

## Description

### CROSS-REFERENCE TO RELATED APPLICATIONS

This application claims the benefit of U.S. Provisional Application No. 62/250,755, filed November 4, 2015.

### FIELD OF THE INVENTION

The present invention relates to lawn, garden, and golf course maintenance vehicles.

### BACKGROUND OF THE INVENTION

Maintenance vehicles, such as lawn maintenance vehicles in the form of lawn mowers or golf course maintenance vehicles in the form of bunker rakes and types of vehicles, are used on sometimes rough terrain that includes hillsides, gullies, recessed sand traps, or other sloped surfaces. Many of these maintenance vehicles are steered with control levers in the form of lap bars, wherein the lap bars often directly control hydraulic actuators or electronic controllers independently driving each of a pair of traction wheels. These vehicles typically include at least one caster wheel that engages the ground, but the caster wheel(s) rotates freely and is not steered. These un-steered caster wheels can cause uneven steering or difficulty in controlling and maneuvering the maintenance vehicle. For example, when maneuvering maintenance vehicles over these rough terrains, steering becomes an issue due to slippage of the traction wheels or loss of contact between the caster wheel(s) and the ground.

DE 10 2013 215425 A1 describes a vehicle having a frame in which a characteristic of a steering mechanism is measured (implicit) which is provided to a controller which controls electric motors which drive (front) wheels with differing torques to effect steering of the vehicle. According to a variant discussed in DE 10 2013 215425 A1, each non-driven steered (rear) wheel can be moved by means of an actuator, which can be controlled by the controller in an appropriate way, such that the steering angle of each non-driven wheel corresponds to the drive differential imposed on the driven wheels by the controller. In one variant DE 10 2013 215425 A1 further discloses that the driven wheels are driven by an electromotor by means of a transmission which allows the differential steering distribution of torque to the front wheels.

FR 2 720 984 A1 discloses an arrangement similar to DE 10 2013 215425 A1.

US 2013/056287 A1 discloses a three-wheeled electric vehicle. The rotation angle of a steering wheel is used to control power to the front driving wheels, and to control the rear steered wheel.

### BRIEF SUMMARY OF THE INVENTION

One aspect of the present invention provides a maintenance vehicle comprising a frame; a steering mechanism comprising: a pair of control levers operatively connected to said frame; a pair of transmissions, wherein each transmission is operatively connected to one of said pair of control levers, each of said transmissions has an output shaft that is connected to a traction wheel, wherein said pair of control levers directly control said transmissions; a first sensor and a second sensor, wherein said first sensor is connected to a first output shaft and said second sensor is connected to a second output shaft, wherein each of said first and second sensors measures at least one characteristic of said corresponding output shaft, each of said sensors generating a first output signal representing said at least one measured characteristic; a system controller operatively connected to said first and second sensors for receiving said first output signals therefrom, wherein said system controller is configured to calculate an overall steered direction and to generate at least one second output signal; at least one steered wheel assembly operatively connected to said frame, each of said at least one steered wheel assembly having at least one steered wheel; and at least one steering controller operatively connected to said system controller, said at least one steering controller receiving one of said at least one second output signal from said system controller, wherein said steering controller operatively rotates said at least one steered wheel assembly in response to said at least one second output signal from said system controller to steer said at least one steered wheel assembly to said overall steered direction.

Another aspect of the present invention provides a method for steering a maintenance vehicle comprising providing a steering assembly having a pair of control levers operatively connected to a pair of transmissions, wherein each transmission has an output shaft extending therefrom to which a traction wheel is attached, and movement of each of said control levers controls said corresponding transmission; measuring at least one characteristic of each of said output shafts of said pair of transmissions; providing a system controller for calculating an overall steered direction based upon said measured characteristic of each of said output shafts; generating an output signal from said system controller; and steering at least one steered wheel in said overall steered direction in response to said output signal from said system controller.

Advantages of the present invention will become more apparent to those skilled in the art from the following description of the embodiments of the invention which have been shown and described by way of illustration. As will be realized, the invention is capable of other and different embodiments, and its details are capable of modification in various respects.

### BRIEF DESCRIPTION OF SEVERAL VIEWS OF THE DRAWINGS

These and other features of the present invention, and their advantages, are illustrated specifically in embodiments of the invention now to be described, by way of example, with reference to the accompanying diagrammatic drawings, in which:
FIG. 1 is a perspective view of an embodiment of a maintenance vehicle;
FIG. 2A is a schematic view of one embodiment of a steering assembly of the maintenance vehicle shown in FIG. 1;
FIG. 2B is a schematic view of a not claimed example of a steering assembly of the maintenance vehicle shown in FIG. 1;
FIG. 2C is a schematic view of still another embodiment of a steering assembly of the maintenance vehicle shown in FIG. 1;
FIG. 2D is a schematic view of yet another not claimed example of a steering assembly of the maintenance vehicle shown in FIG. 1;
FIG. 3A is a schematic of an embodiment of a steering assembly of a maintenance vehicle having one steered wheel;
FIG. 3B is a schematic of another not claimed example of a steering assembly of a maintenance vehicle having a pair of steered wheels; and
FIG. 4 is a perspective view of another embodiment of a maintenance vehicle.

It should be noted that all the drawings are diagrammatic and not drawn to scale. Relative dimensions and proportions of parts of these figures have been shown exaggerated or reduced in size for the sake of clarity and convenience in the drawings. The same reference numbers are generally used to refer to corresponding or similar features in the different embodiments. Accordingly, the drawing(s) and description are to be regarded as illustrative in nature and not as restrictive.

### DETAILED DESCRIPTION OF THE PREFERRED EMBODIMENT

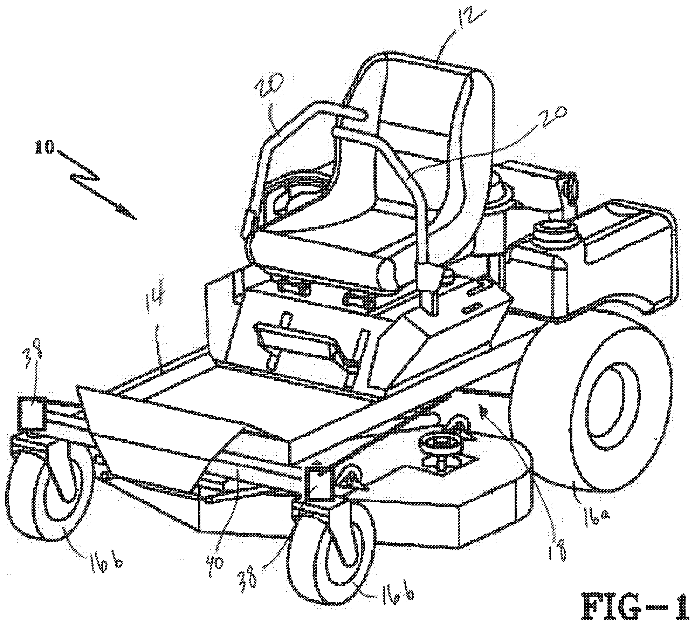

Referring to FIG. 1, an exemplary embodiment of a maintenance vehicle 10 is shown. The maintenance vehicle 10 shown in FIG. 1 is illustrated as a riding lawn mower, but it should be understood by one having ordinary skill in the art that reference to a maintenance vehicle 10 may also mean a garden tractor, a golf course manicure vehicle such as a reel mower, a sand trap/bunker maintenance vehicle, or the like. The maintenance vehicle 10 includes a seat 12 on which an operator sits during operation of the vehicle, and the seat 12 is operatively connected to a frame 14 that supports the seat 12. In other embodiments, the maintenance vehicle 10 can be a stand-on-type maintenance vehicle, wherein a platform (not shown) or the like is operatively connected to the frame 14 to allow the operator to stand on the platform during operation of the maintenance vehicle 10. The maintenance vehicle 10 also includes a plurality of wheels 16, which includes a pair of traction wheels 16a and at least one steered wheel 16b that is part of a steered wheel assembly 17 that is connected to the frame 14. The operator generally controls the direction and rotational speed of the traction wheels 16a by way of a steering assembly 18, and the steered wheel(s) 16b is indirectly controlled through at least one controller or actuator that determines the steered orientation of the steered wheel(s) 16b in response to the rotational speed and the rotational direction of each of the traction wheels 16a.

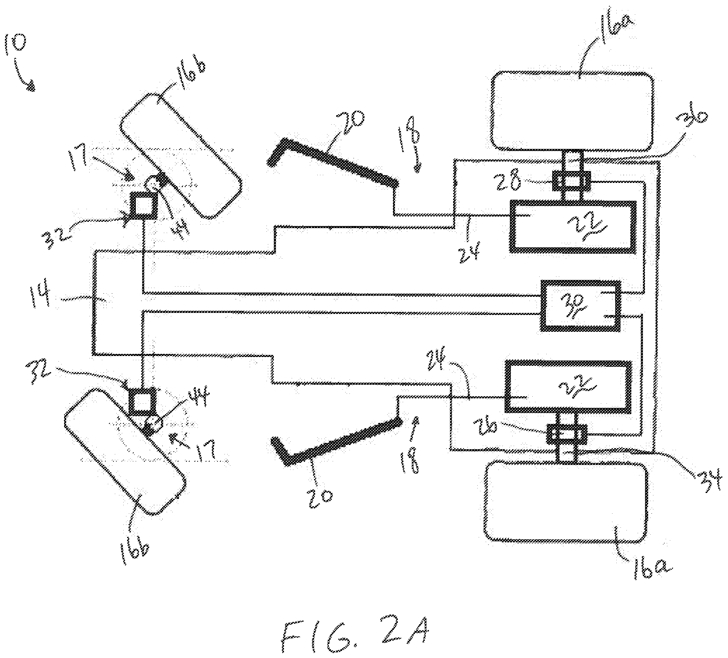

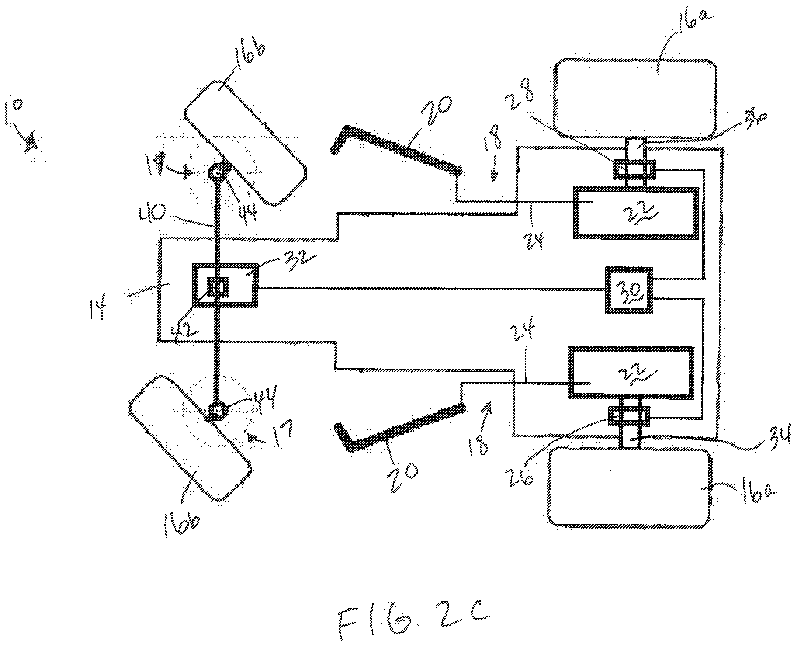

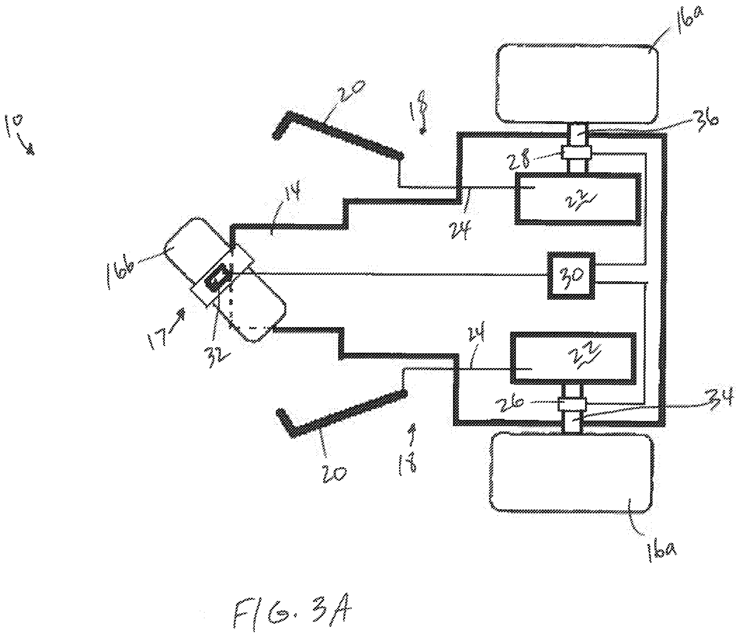

In each of the embodiments of the maintenance vehicle 10 described below, the maintenance vehicle 10 includes a steering assembly 18 which is operable by the operator to control the speed and direction of the maintenance vehicle 10. In an embodiment, the steering assembly 18 includes at least one control lever 20 and a pair of hydraulic actuators or electronic controllers and traction motors 22. In the embodiment illustrated in FIGS. 2A and 2C and 3A the steering assembly 18 includes a pair of control levers 20 and a pair of corresponding hydrostatic or electric-driven transmissions 22 operatively connected to a corresponding control lever 20, wherein each transmission 22 includes an output shaft 34, 36 extending therefrom. The steering assembly 18 further includes the linkage assembly 24 that connects each control lever 20 to the corresponding transmission 22. The output shafts 34, 36 of each transmission 22 are directed outwardly from the frame 14 from opposing sides thereof. In an embodiment, the control levers 20 are formed as lap bars, as shown in FIG. 1. The control levers 20 are positioned on opposing sides of the seat 12 and are graspable and rotatable by the operator. The control levers 20 are movable in the forward and rearward directions relative to the longitudinal centerline of the maintenance vehicle 10 for controlling the direction and speed of the maintenance vehicle 10. The control levers 20 are also configured to rotate laterally outward into a neutral position to allow the operator to enter and/or exit the seat 12. In another embodiment, the maintenance vehicle 10 is controlled by only a single control lever, such as a joystick or the like. It should be understood by one having ordinary skill in the art that any number of control levers 20 can be used to control the speed and direction of the maintenance vehicle 10. In other embodiments, the maintenance vehicle 10 is controlled by a pair of foot controls that are configured to be operated by a user's feet in a manner similar to the control levers 20 shown in FIG. 1. Although different types of user-controlled steering components can be used for user steering input to the steering assembly 18, the description below will refer to only the control levers 20 as being lap bars.

The maintenance vehicle 10 further includes a first sensor 26, a second sensor 28, a system controller 30, and a steering controller 32, as shown in FIGS. 2A, 2C and 3A. The first and second sensors 26, 28 are configured to sense or measure at least one characteristic and to generate a first output signal. The first output signal generated by each of the first and second sensors 26, 28 is transferred to the system controller 30. The system controller 30 processes the output signal from the first and second sensors 26, 28 and transmits a second output signal to the steering controller 32. The steering controller 32, in turn, utilizes the second output signal from the system controller 30 to steer at least one steered wheel assembly 17 which correspond to the overall steered direction produced by the driven traction wheels 16a or the relative positions of the control levers 20.

In the illustrated embodiment, the pair of hydrostatic or electric-driven transmissions 22 are each operatively connected to a corresponding control lever 20, wherein each hydrostatic or electric-driven transmission 22 is configured to drive a traction wheel 16a by way of an output shaft 34, 36, as shown in FIGS. 2A, 2C and 3A. In some embodiments, each control lever 20 is operatively connected to the swashplate or actuator (not shown) of one of the hydrostatic or electric-driven transmissions 22 such that the control lever 20 directly controls the corresponding hydrostatic or electric-driven transmission 22. In the embodiments illustrated in FIGS. 2A, 2C and 3A the control levers 20 are connected to the hydrostatic or electric-driven transmissions 22 by way of a linkage assembly 24 which is included in the steering assembly 18, thereby providing direct control of the hydrostatic or electric-driven transmissions 22 by the control levers 20.

When each control lever 20 is in a neutral position - at which point the control levers 20 can be rotated laterally outward to engage a parking brake or the like - the corresponding hydrostatic or electric-driven transmission 22 is similarly in a neutral state such that the transmission provides no rotation or drive to the traction wheel 16a attached thereto. As a control lever 20 is rotated forwardly of the neutral position, the forward movement of the control lever 20 is transferred via the linkage assembly 24 to the corresponding hydrostatic or electric-driven transmission 22 to cause the transmission to generate forward rotation of the traction wheel 16a attached thereto. The greater the angle the control lever 20 is rotated forwardly relative to the neutral position, the greater the rotational speed that the hydrostatic or electric-driven transmission 22 drives the corresponding traction wheel 16a. Similarly, as the control lever 20 is rotated rearwardly of the neutral position, the rearward movement of the control lever 20 is transferred via the linkage assembly 24 to the corresponding hydrostatic or electric-driven transmission 22 to cause the transmission to generate rearward rotation of the traction wheel 16a attached thereto. The more rearward the control lever 20 is rotated relative to the neutral position, the greater the rotational speed that the hydrostatic or electric-driven transmission 22 drives the corresponding traction wheel 16a. While the relative fore/aft position of the control levers 20 relative to the neutral position determines the relative fore/aft speed of the corresponding traction wheel 16a, the overall relative position of the control levers 20 relative to each other - and also relative to the neutral position - determines the direction of travel of the maintenance vehicle, as will explained below. The independently-driven traction wheels 16a provides the maintenance vehicle 10 with zero-turn radius capabilities, particularly when one of the control levers 20 is pushed forward relative to the neutral position and the other control lever 20 is pulled rearward relative to the neutral position.

In other embodiments, the control levers 20 are connected to the hydrostatic or electric-driven transmissions 22 by way of an electrical connector configured to electrically control a solenoid or other component configured to adjust the swashplate of the hydrostatic transmission or to directly electrically control an electric-driven transmission. It should be understood by one having ordinary skill in the art that any connecting assembly - be it electrical, mechanical, or electro-mechanical - can be used to operatively connect the control levers 20 to the transmissions 22.

According to the invention, each of the first and second sensors 26, 28 is operatively connected to one of the hydrostatic or electric-driven transmission 22 for sensing or measuring at least one characteristic of each transmission. The characteristic of the transmission 22 measured by the first and second sensors 26, 28 is the output (such as rotational speed and rotational direction) of the corresponding hydrostatic or electric-driven transmission 22 (FIGS. 2A, 2C, and 3A).

According to the invention, the first and second sensors 26, 28 are configured to measure a characteristic, wherein the characteristic is the rotational output of the hydrostatic or electric-driven transmissions 22 by way of the corresponding output shaft 34, 36.

The first and second sensors 26, 28 are operatively connected to the system controller 30, and the first and second sensors 26, 28 are both configured to generate a first output signal in response to the characteristic. The first output signal of each of the first and second sensors 26, 28 is then transmitted to the system controller 30 in response to the characteristic(s) of the corresponding hydrostatic or electric-driven transmission 22.

In the embodiment of the maintenance vehicle 10 shown in FIGS. 2A, 2C and 3A the first and second sensors 26, 28, are configured to sense the rotational speed as well as the fore/aft rotational direction of the output shafts 34, 36 of the hydrostatic or electric-driven transmissions 22. The first and second sensors 26, 28 are operatively connected to the corresponding hydrostatic or electric-driven transmission 22, to the frame 14, or to any other structure that would still allow the first and second sensors 26, 28 to properly operate. The first and second sensors 26, 28 each generate a first output signal in response to sensing the rotational speed and rotational direction of the output shafts 34, 36. The first and second sensors 26, 28 each transmit the first output signal to the system controller 30. The first and second sensors 26, 28 can be formed as a Hall effect sensors, or can be any other sensor (or combination of sensors) that are capable of sensing both the rotational speed of the output shafts 34, 36 as well as the rotational direction of the output shafts 34, 36. Although each of the first and second sensors 26, 28 is described herein as a single sensor, it should be understood by one having ordinary skill in the art that a combination of multiple sensors - one to sense the rotational speed and one to sense the rotational direction of the corresponding output shaft 34, 36, or other characteristic - can be used to sense the output of the corresponding hydrostatic or electric-driven transmission 22.

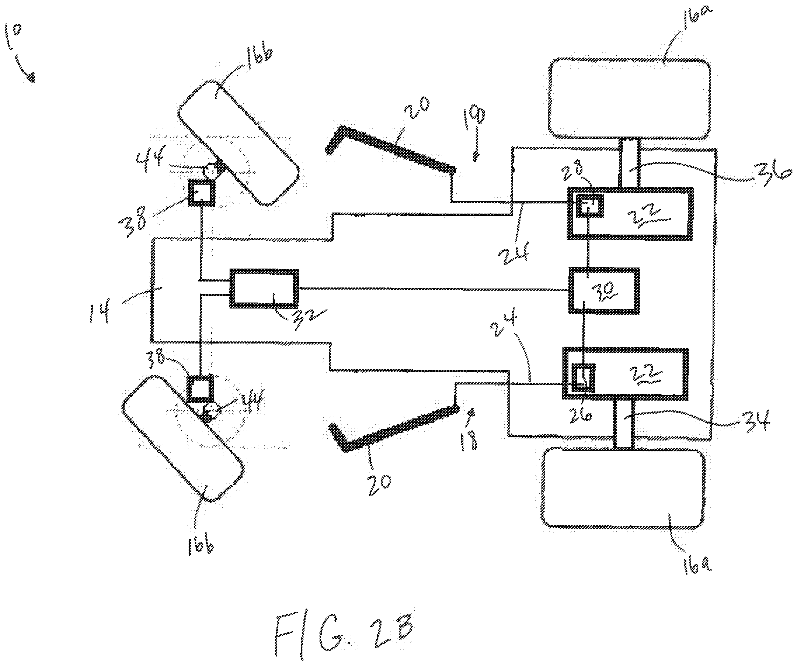

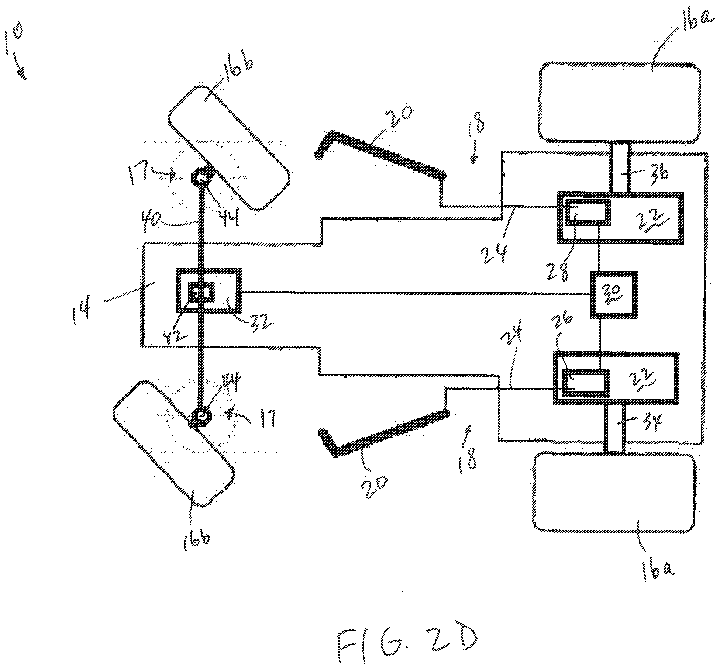

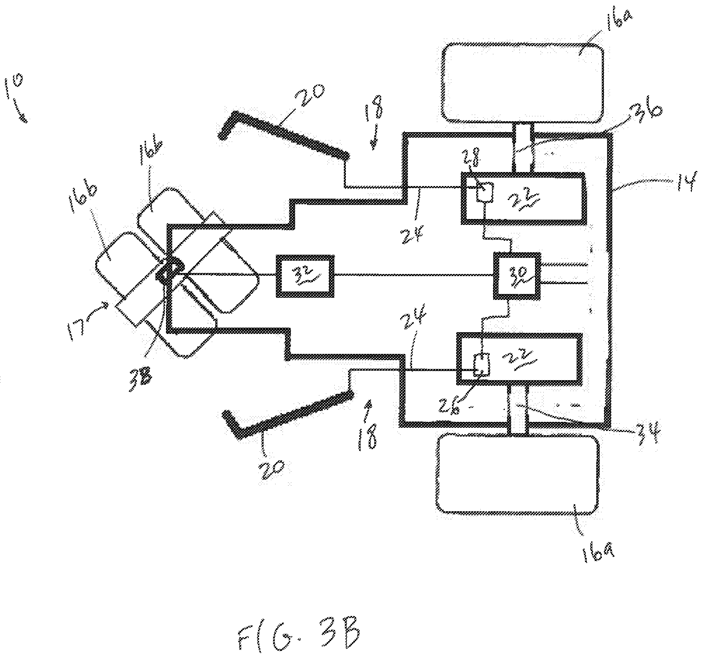

In a not claimed example of a maintenance vehicle 10 shown in FIGS. 2B, 2D, and 3B, the first and second sensors 26, 28 are configured to measure the relative position of the control levers 20. In the the not claimed example, the first and second sensors 26, 28 measure the relative position of a specific location of the linkage assembly 24 extending between a control lever 20 and a corresponding hydrostatic or electric-driven transmission 22 to determine the mechanical input from the control levers 20 to the hydrostatic or electric-driven transmissions 22. The linkage assemblies 24 convert the rotational, or fore/aft movement of a corresponding control lever 20 into a translational mechanical input into the hydrostatic or electric-driven transmission 22. The first and second sensors 26, 28 are each configured to sense the linear position of the input from the corresponding linkage assembly 24 and generate a first output signal representing the characteristic, or mechanical input (or relative change of position of the location on the linkage assembly 24), into the hydrostatic or electric-driven transmission 22. In a not claimed variant, the first and second sensors 26, 28 are configured to sense the input into the corresponding hydrostatic or electric-driven transmission 22 and the first output signals generated by the first and second sensors 26, 28 represent both the intended rotational speed and rotational direction that the corresponding hydrostatic or electric-driven transmission 22 is supposed to produce to drive the traction wheel 16a attached thereto. In a not claimed example, the first and second sensors 26, 28 are configured to sense the input position of the linkage assembly 24 into the corresponding hydrostatic or electric-driven transmission 22 to generate a first output signal that is received and utilized by the system controller 30.

In a not claimed example, the first and second sensors 26, 28 can be configured to measure the relative position of the swashplate (not shown) of the hydrostatic or actuator of the electric-driven transmissions 22. In a further not claimed variant, the first and second sensors 26, 28 can be operatively connected to the control levers 20 for measuring or sensing the relative position of each lever during operation of the maintenance vehicle 10. It should be understood by one having ordinary skill in the art that the first and second sensors 26, 28 can be positioned at any location on the maintenance vehicle 10 and be configured to measure or sense any characteristic that is either the output of the transmissions 22 used to determine both the rotational speed and rotational direction of each of the traction wheels 16a.

The left and right hydrostatic or electric-driven transmissions 22 of the maintenance vehicle 10 are configured to be directly controlled by a corresponding control lever 20, and the output from the hydrostatic or electric-driven transmissions 22 is measured by the first and second sensors 26, 28 to generate a first output signal that is received by the system controller 30. The system controller 30 is configured to receive the first output signals generated by the first and second sensors 26, 28, and the system controller 30 then transmits at least one second output signal to a steering controller 32 for indirectly controlling the steering of the steered wheel assembly/assemblies 17. The steered wheel(s) 16b is indirectly controlled because the signal for controlling the relative steered direction of the steered wheel assembly/assemblies 17 is a result of the characteristic output of the hydrostatic or electric-driven transmissions 22. In other words, the hydrostatic or electric-driven transmissions 22 are directly driven by the control levers, and the steered wheel(s) 16b are indirectly driven such that the direction of the steered wheel(s) 16b is in response to a calculated value or position which utilizes the characteristic of the output of those same hydrostatic or electric-driven transmissions 22. In an embodiment, the system controller 30 is configured to receive the first output signal from each of the first and second sensors 26, 28, and the system controller 30 compares the data provided by the first output signals to determine the overall steered direction of the maintenance vehicle 10. The controller 30 then generates a second output signal that causes the steered wheel assembly/assemblies 17 to be steered in the overall steered direction as determined by the characteristic of the traction wheels 16a. In other embodiments, the system controller 30 receives the output signal from both of the hydrostatic or electric-driven transmissions 22 and utilizes a look-up table to determine the steered direction of the maintenance vehicle 10 and generates a second output signal for steering the steered wheel assembly/assemblies 17 in substantially the same direction. In some embodiments, the calculation of the speed of rotation as well as the direction of rotation of each output shaft 34, 36 is performed by the system controller 30, but can alternatively be performed by the first and second sensors 26, 28. In other embodiments, the speed of rotation and/or the direction of rotation of the output shafts 34, 36 of the hydrostatic or electric-driven transmissions 22 are not calculated by either the first or second sensors 26, 28 or by the system controller 30, yet the overall steered direction of the maintenance vehicle 10 is determined by the rotation of the traction wheels 16a and calculated by the system controller 30.

The system controller 30 is configured to receive the first output signal from each of the first and second sensors 26, 28 relating to the characteristic, which can include the measured rotational speed and rotational direction of the traction wheels 16a. The system controller 30 then generates a second output signal to either a steering controller 32 or a driver 38 that causes the steered wheel assembly/assemblies 17 to be steered in the overall steered direction of the maintenance vehicle 10. In an embodiment, the second output signal from the system controller 30 is electrically transmitted to the steering controller 32 by a wired connection. In another embodiment, the second output signal from the system controller 30 is wirelessly transmitted to the steering controller 32 (not shown). In other embodiments, the system controller 30 generates a plurality of second output signals, wherein each second output signal is transmitted to a separate steering controller 32.

As shown in FIGS. 2A and 3A, the system controller 30 is operatively connected to at least one steering controller 32 that is operatively connected to, or integrally formed with, a driver 38 that is configured to rotate the steered wheel assembly/assemblies 17 operatively connected thereto. In an embodiment, the system controller 30 transmits a second output signal directly to the steering controller 32. In this embodiment, the system controller 30 receives the first output signals from the first and second sensors 26, 28 and generates the second output signal that is transmitted to the driver(s) 38 which cause the driver(s) to steer the steered wheel assembly/assemblies 17 in the direction of travel of the maintenance vehicle 10 in response to the determined direction based upon the characteristics measured by the first and second sensors 26, 28.

As shown in FIGS. 2B and 3B, which concern not claimed variants, the system controller 30 is operatively connected to a steering controller 32, and the steering controller 32 is then operatively connected to at least one driver 38 that is configured to rotate the steered wheel assembly/assemblies 17 operatively connected thereto. The steering controller 32 is configured to operatively control each driver 38, wherein the steering controller 32 causes each driver 38 to rotate the steered wheel assembly 17 operatively connected thereto in response to the second output signal received from the system controller 30. In this embodiment, the system controller 30 receives the first output signals from the first and second sensors 26, 28 and generates the second output signal that is transmitted to the steering controller 32, wherein the first output signal includes data relating to the speed and steered direction of the maintenance vehicle calculated by the system controller 30. The steering controller 32 is configured to receive the second output signal from the system controller 30 and calculates the relative rotation of each steered wheel assembly 17 necessary to achieve substantially the same steered direction produced by the traction wheels 16a. The second output signal from the steering controller 32 then prompts the driver 38 to rotate the steered wheel assembly 17 attached thereto.

As shown in FIGS., where 2D concerns a not claimed variant, the system controller 30 is operatively connected to the steering controller 32 which includes an integrated actuator 42 that is configured to rotate the steered wheel assemblies 17 operatively connected thereto, wherein the system controller 30 transmits a second output signal directly to the steering controller 32. In an embodiment, the steering controller 32 is configured to receive the second output signal generated by the system controller 30, and the steering controller 32 then causes the actuator 42 to steer the steered wheel assemblies 17 in the overall steered direction of the maintenance vehicle 10.

In the embodiments illustrated in FIGS. 2A-2B, where 2B concerns a not claimed variant, each of the drivers connected to the steering controller 32 is operatively connected to a steered wheel assembly 17. In FIGS. 2C-2D, where 2D concerns a not claimed variant, the actuator 42 is operatively connected to a tie rod 40, wherein a steered wheel assembly 17 is operatively connected to each opposing end of the tie rod 40. In the embodiment illustrated in FIGS. 3A-3B, where 3B concerns a not claimed variant, the driver 38 is operatively connected to a single steered wheel assembly 17. The drivers 38 are configured to turn, or otherwise rotate, the steered wheel assembly 17 in order to steer the steered wheel(s) 16b in the direction of travel in response to the calculated rotational speed and rotational direction of the traction wheels 16a or the calculated steered direction of the maintenance vehicle 10 based upon the characteristic measured by the first and second sensors 26, 28.

In an embodiment, the drivers 38 are formed as servomotors, but it should be understood by one having ordinary skill in the art that the drivers 38 can be formed of any mechanism capable of receiving the second output signal from the system controller 38 and rotating a steered wheel assembly 17 operatively connected thereto in response to the second output signal from the system controller 30.

In the embodiments shown in FIGS. 2C-2D, where 2D concerns a not claimed variant, the steering controller 32 includes an actuator 42 and a tie rod 40, wherein the tie rod 40 is movable in a generally axial manner by the actuator 42. A steered wheel assembly 17 is attached to each opposing distal end of the tie rod 40, and the tie rod 40 is configured to simultaneously control the rotation of the steered wheel assemblies 17. The actuator 42 is controlled by the steering controller 32 and is configured to move the tie rod 40 laterally, thereby causing rotation of both steered wheel assemblies 17. In an embodiment, each end of the tie rod 40 is directly connected to the kingpin 44 of the steered wheel assemblies 17. In another embodiment, each end of the tie rod 40 is indirectly connected to the kingpin 44 of the steered wheel assemblies 17, wherein each end of the tie rod 40 is attached to a bell crank (not shown) which is configured to drive a corresponding bell crank attached to the kingpin 44. Lateral movement of the tie rod 40 causes the mating bell cranks to rotate, which causes the kingpin 44 to similarly rotate thereby resulting in the rotation of the steered wheels 16b. The bell cranks allows for over-center steering of the steered wheels 16b. In an embodiment, the actuator 42 includes a motor (not shown) and a pinion gear (not shown) that meshes with a corresponding rack gear (not shown) formed on the tie rod 40 to form a rack-and-pinion steering mechanism between the actuator 42 and the tie rod 40. In other embodiments, the actuator 42 can be formed as any mechanism that causes the tie rod 40 to move substantially laterally to steer the steered wheel assemblies 17, including a sector gear (not shown) that drives the tie rod 40 laterally or a double-ended cylinder which can have separate tie rods 40 extending therefrom in which each tie rod 40 drives the rotation of a corresponding steered wheel assembly 17.

FIGS. 2A-2D and 3A-3B where 2A, 2C and 3A concern not claimed variants, illustrate electrical connections between the first and second sensors 26, 28 and the system controller 30 and between the system controller 30 and the drivers 38 and the steering controller 32. It should be understood by one having ordinary skill in the art that the output signals from the first and second sensors 26, 28 as well as the output signal from the system controller 30 can also be sent wirelessly, mechanically, or any other method of transmission from the system controller 30 to the steering controller 32 for indirectly controlling the steering of the steered wheels 16b.

FIGS. 2A-2D and 3A-3B where 2A, 2C and 3A concern not claimed variants, illustrate both a first sensor and a second sensor 26, 28 for measuring at least one characteristic of the hydrostatic or electric-driven transmissions 22 (which may include the rotational speed and/or rotational direction of either the output from the transmissions). In other embodiments, each of the first sensor 26 and the second sensor 28 includes multiple sub-sensors, wherein each sub-sensor measures either the rotational speed or the rotational direction of the output shaft 34, 36.

FIG. 3A illustrates an embodiment of a maintenance vehicle 10 in which the steered wheel assembly 17 includes only a single steered wheel 16b, and FIG. 3B illustrates an embodiment of a maintenance vehicle 10 in which the steered wheel assembly 17 includes a pair of steered wheels 16b. The steered wheel assembly 17 having a plurality of steered wheels 16b provides more stable contact with the ground at the front end of the vehicle, but the increased contact area between the wheels and the ground increases the friction therebetween which may increase the force necessary to rotate the steered wheel assembly 17.

In the embodiments shown in FIGS. 2A and 2C each steered wheel assembly 17 includes a kingpin 44 operatively connected to a knuckle (not shown) that is attached to the frame 14. The steered wheel assembly 17 also includes a steered wheel 16b that is operatively connected to the kingpin 44 such that rotation of the kingpin 44 results in similar rotation of the steered wheel 16b connected thereto. In the embodiment shown in FIG. 3A each steered wheel assembly 17 includes at least one steered wheel 16b that is attached to a generally U-shaped bracket 44. The rotation or steered angle of the U-shaped bracket 44 is determined by the steering controller 32 which controls the driver that rotates the U-shaped bracket 44 and the steered wheel(s) 16b attached thereto.

The steered wheel(s) 16b, as shown in FIGS. 2A-2D and 3A-3B, where 2A, 2C and 3A concern not claimed variants, are steerably controlled by the steering controller 32. Each steered wheel 16b includes a rim (not shown) having a pneumatic tire attached thereto, and the rim is operatively coupled to a kingpin 44. The pneumatic tire provides a flexible, grippable surface for positively contacting the ground during operation. As will be explained below, the positive contact between the steered wheel(s) 16b and the ground as well as the steerability of the steered wheel(s) 16b add stability to the maintenance vehicle 10, particularly on wet surfaces, inclined surfaces, and/or during a turning operation. In other embodiments, the steered wheel(s) 16b are formed as a flexible and/or surface-grippable non-pneumatic tire.

Positioning the steering controller 32 as well as the steered wheel(s) 16b at one end of the maintenance vehicle 10 provides additional weight at that end of the maintenance vehicles to better stabilize the vehicle along the longitudinal axis, particularly on embodiments of the maintenance vehicle 10 in which the engine, motor, or power supply is located at the opposing longitudinal end of the maintenance vehicle 10. Typical zero-turn mowers and other similar machines have at least three-fourths of the weight of the vehicle supported by the traction wheels, and these machines also utilize non-steerable caster wheels. The caster wheels add very little weight to the front end of the vehicle, and the caster wheels are very poor at gripping the ground during turns and/or while the vehicle is driven on a hillside. The steered wheel(s) 16b of the maintenance vehicle 10 provide added positive, contact with the ground. This is particularly helpful when driving the vehicle 10 laterally across inclined surfaces by reducing the likelihood of slippage of that end of the vehicle, which makes the maintenance vehicle 10 more stable and controllable.

In operation, an operator positioned in the seat 12 grasps the control levers 20 and rotates the control levers 20 in the fore/aft direction to control both the speed and direction of the maintenance vehicle 10. When both control levers 20 are rotated forwardly from the neutral position the same amount, the hydrostatic or electric-driven transmissions 22 generate the same forward rotational speed to the traction wheels 16a. Simultaneously, each of the first and second sensors 26, 28 provide a first output signal to the system controller 30, and the system controller 30 transmits a second output signal to the steering controller 32 which operatively controls the steered direction of the steered wheel assembly/assemblies 17 to align the steered wheel(s) 16b to steer a straight-ahead course. If one of the control levers 20 is rotated forwardly more than the other or one of the control levers 20 is pulled rearwardly (after both control levers have previously been rotated forward of the neutral position), then the traction wheels 16a steer the vehicle in the direction of the rearward-most control lever 20. Simultaneously, each of the first and second sensors 26, 28 provide a first output signal to the system controller 30, and the system controller 30 transmits a second output signal to the steering controller 32 to turn the steered wheel(s) 16b of the steered wheel assembly/assemblies 17 at an angle that corresponds to the overall steered direction determined by the traction wheels 16a. The steered wheels 16b are steered in a similar manner when both of the control levers are rotated rearwardly of the neutral position. Similarly, the steered wheels 116b are steered in a manner corresponding to the direction of travel determined by the traction wheels 16a when one of the control levers 20 is pushed forwardly relative to neutral and the other control lever 20 is pulled rearwardly relative to neutral.

When one control lever 20 is rotated forwardly of the neutral position and the other control lever is rotated rearwardly of the neutral position - resulting in a small-radius or zero-radius turn - the first and second sensors 26, 28 measure either the relative position of both control levers 20 being input into the hydrostatic or electric-driven transmissions 22 or the rotational speed and rotational direction of the respective output shaft 34, 36 and generate a first output signal to the system controller 30. The system controller 30 then generates a second output signal to the steering controller 32 to steer the steered wheel(s) 16b by rotating the wheel(s) in the direction of travel that is determined by the relative speed and direction of the traction wheels 16a.

The above description of the various embodiments of the maintenance vehicle 10 illustrate the traction wheels 16a being positioned at the rear of the vehicle and the steered wheels 16b being positioned at the front of the vehicle. However, in other embodiments (not shown), the wheel positions can be reversed such that the traction wheels 16a are positioned at the front end of the vehicle and the steered wheels 16b are positioned at the rear end of the vehicle.

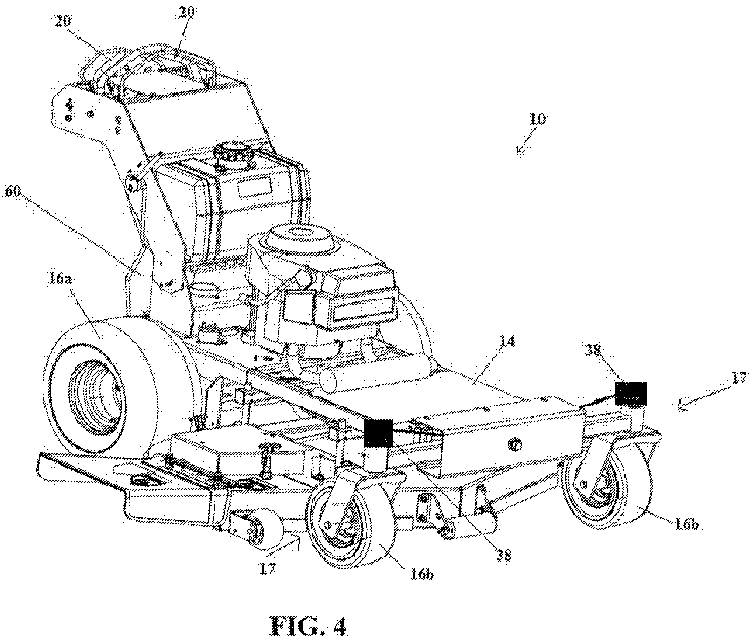

Referring to FIG. 4, another embodiment of a maintenance vehicle 10 is shown. In this embodiment, the maintenance vehicle 10 is shown as a stand-on lawn mower, wherein the maintenance vehicle 10 includes a frame 14, a pair of traction wheels 16a, and a pair of steered wheels 16b which are each part of a steered wheel assembly 17. The maintenance vehicle 10 includes a stand-on platform 60, which is configured to fold down to provide a surface on which an operator can stand during operation of the maintenance vehicle 10. While standing on the platform 60, the operator grasps a pair of control levers 20 that are operatively connected to a pair of hydrostatic or electric-driven transmissions 22 by way of a linkage assembly 18. The traction wheels 16a are positioned adjacent to the rear end of the maintenance vehicle 10, and steered wheel assembly 17 having a steered wheel 16b is positioned adjacent to the front end of the maintenance vehicle 10. Each steered wheel assembly 17 has a driver 38 operatively connected thereto, and each driver 38 is controlled by a steering controller (not shown), as described above. When the stand-on platform 60 is rotated into the stored position, as shown in FIG. 4, the maintenance vehicle 10 is operated as a self-propelled walk-behind mower. It should be understood by one having ordinary skill in the art that the maintenance vehicle 10 can be formed as only a walk-behind mower configured to include control levers 20 that directly control a pair of traction wheels and indirectly steer a pair of steered wheels.

While preferred embodiments of the present invention have been described, it should be understood that the present invention is not so limited and modifications may be made without departing from the present invention. The scope of the present invention is defined by the appended claims.

## Claims

1. A maintenance vehicle comprising:
a frame (14);
a steering mechanism comprising:
a pair of control levers (20) operatively connected to said frame (14);
a pair of transmissions (22), wherein each transmission (22) is operatively connected to one of said pair of control levers (20), each of said transmissions (22) has an output shaft (34, 36) that is connected to a traction wheel (16a), wherein said pair of control levers (20) directly control said transmissions (22);
a first sensor (26) and a second sensor (28), wherein said first sensor (26) is connected to a first output shaft (34) and said second sensor (28) is connected to a second output shaft (36), wherein each of said first and second sensors (26, 28) measures at least one characteristic of said corresponding output shaft (34, 36), each of said sensors (26, 28) generating a first output signal representing said at least one measured characteristic;
a system controller (30) operatively connected to said first and second sensors (26, 28) for receiving said first output signals therefrom, wherein said system controller (30) is configured to calculate an overall steered direction and to generate at least one second output signal;
at least one steered wheel assembly (17) operatively connected to said frame (14), each of said at least one steered wheel assembly (17) having at least one steered wheel (16b); and
at least one steering controller (32) operatively connected to said system controller (30), said at least one steering controller (32) receiving one of said at least one second output signal from said system controller (30), wherein said steering controller (32) operatively rotates said at least one steered wheel assembly (17) in response to said at least one second output signal from said system controller (30) to steer said at least one steered wheel assembly (17) to said overall steered direction.

2. The maintenance vehicle of Claim 1, wherein said characteristic measured by each of said first and second sensors (26, 28) includes both a rotational speed and a rotational direction of said output shaft (34, 36) extending between one of said transmissions (22) and one of said traction wheels (16a) attached thereto.

3. The maintenance vehicle of Claim 1 or 2 further comprising a driver (38) operatively connected to said steering controller (32) and said steered wheel assembly (17), wherein said driver (38) being controlled by said steering controller (32) for rotating said steered wheel assembly (17) in response to said second output signal received by said steering controller (32).

4. The maintenance vehicle of Claim 3, wherein said at least one driver (38) includes a motor attached to said steered wheel assembly (17) for steering said at least one steered wheel (16b).

5. The maintenance vehicle of Claim 3, wherein one steered wheel assembly (17) is attached to each end of a tie rod (40) having a rack gear formed thereon, and said steering controller (32) is operatively connected to an actuator (42) that includes a pinion gear that is meshingly engaged with said rack gear of said tie rod (40), wherein said tie rod is laterally translatable by said actuator (42) in response to said at least one second output signal from said system controller (30).

6. The maintenance vehicle of any preceding claim, wherein each of said pair of transmissions (22) is a hydrostatic transmission or an electric-driven transmission.

7. A method for steering a maintenance vehicle comprising:
providing a steering assembly (18) having a pair of control levers (20) operatively connected to a pair of transmissions (22), wherein each transmission (22) has an output shaft (34, 36) extending therefrom to which a traction wheel (16a) is attached, and movement of each of said control levers (20) controls said corresponding transmission (22);
measuring at least one characteristic of each of said output shafts (34, 36) of said pair of transmissions (22);
providing a system controller (30) for calculating an overall steered direction based upon said measured characteristic of each of said output shafts (34, 36);
generating an output signal from said system controller (30); and
steering at least one steered wheel (16b) in said overall steered direction in response to said output signal from said system controller (30).

8. The method of Claim 7, wherein said measured characteristic of each of said output shafts (34, 36) includes a rotational speed and/or a rotational direction of said output shaft (34, 36).

9. The method of Claim 7 or 8, wherein each of said pair of transmissions (22) is a hydrostatic transmission or an electric-driven transmission.

## Patentansprüche

1. Wartungsfahrzeug, umfassend:
einen Rahmen (14),
einen Lenkmechanismus, umfassend:
ein Paar von Steuerhebeln (20), die mit dem Rahmen (14) in betriebsmäßig verbunden sind;
ein Paar von Getrieben (22), wobei jedes Getriebe (22) betriebsmäßig mit einem des Paares von Steuerhebeln (20) verbunden ist, wobei jedes der Getriebe (22) eine Abtriebswelle (34, 36) aufweist, die mit einem Antriebsrad (16a) verbunden ist, wobei das Paar von Steuerhebeln (20) die Getriebe (22) direkt steuert;
einen ersten Sensor (26) und einen zweiten Sensor (28), wobei der erste Sensor (26) mit einer ersten Abtriebswelle (34) verbunden ist und der zweite Sensor (28) mit einer zweiten Abtriebswelle (36) verbunden ist, wobei jeder des ersten und zweiten Sensors (26, 28) mindestens eine Eigenschaft der entsprechenden Abtriebswelle (34, 36) misst, wobei jeder der Sensoren (26, 28) ein erstes Ausgangssignal erzeugt, das die mindestens eine gemessene Eigenschaft darstellt;
eine Systemsteuervorrichtung (30), die betriebsmäßig mit dem ersten und dem zweiten Sensor (26, 28) verbunden ist, um die ersten Ausgangssignale daraus zu empfangen, wobei die Systemsteuervorrichtung (30) dazu eingerichtet ist, eine gelenkte Gesamtrichtung zu berechnen und mindestens ein zweites Ausgangssignal zu erzeugen;
mindestens eine gelenkte Radanordnung (17), die betriebsmäßig mit dem Rahmen (14) verbunden ist, wobei jede der mindestens einen gelenkten Radanordnung (17) mindestens ein gelenktes Rad (16b) aufweist; und
mindestens eine Lenksteuervorrichtung (32), die mit der Systemsteuervorrichtung (30) betriebsmäßig verbunden ist, wobei die mindestens eine Lenksteuervorrichtung (32) eines des mindestens einen zweiten Ausgangssignals aus der Systemsteuervorrichtung (30) empfängt, wobei die Lenksteuervorrichtung (32) die mindestens eine gelenkte Radanordnung (17) als Reaktion auf das mindestens eine zweite Ausgangssignal aus der Systemsteuervorrichtung (30) betriebsmäßig dreht, um die mindestens eine gelenkte Radanordnung (17) in die gelenkte Gesamtrichtung zu lenken.

2. Wartungsfahrzeug nach Anspruch 1, wobei die durch jeden des ersten und des zweiten Sensors (26, 28) gemessene Eigenschaft sowohl eine Drehzahl als auch eine Drehrichtung der Abtriebswelle (34, 36) umfasst, die sich zwischen einem der Getriebe (22) und einem der daran befestigten Antriebsräder (16a) erstreckt.

3. Wartungsfahrzeug nach Anspruch 1 oder 2, ferner umfassend einen Treiber (38), der betriebsmäßig mit der Lenksteuervorrichtung (32) und der gelenkten Radanordnung (17) verbunden ist, wobei der Treiber (38) durch die Lenksteuervorrichtung (32) gesteuert wird, um die gelenkte Radanordnung (17) als Reaktion auf das zweite Ausgangssignal, das von der Lenksteuervorrichtung (32) empfangen wird, zu drehen.

4. Wartungsfahrzeug nach Anspruch 3, wobei der mindestens eine Treiber (38) einen an der gelenkten Radanordnung (17) befestigten Motor zum Lenken des mindestens einen gelenkten Rades (16b) aufweist.

5. Wartungsfahrzeug nach Anspruch 3, wobei eine gelenkte Radanordnung (17) an jedem Ende einer Spurstange (40) mit einer darauf ausgebildeten Zahnstange befestigt ist und die Lenksteuervorrichtung (32) betriebsmäßig mit einem Stellglied (42) verbunden ist, das ein Ritzel aufweist, das mit der Zahnstange der Spurstange (40) in Eingriff steht, wobei die Spurstange als Reaktion auf das mindestens eine zweite Ausgangssignal aus der Systemsteuervorrichtung (30) durch das Stellglied (42) seitlich verschiebbar ist.

6. Wartungsfahrzeug eines vorhergehenden Anspruchs, wobei jedes des Paares von Getrieben (22) ein hydrostatisches Getriebe oder ein elektrisch angetriebenes Getriebe ist.

7. Verfahren zum Lenken eines Wartungsfahrzeugs, umfassend:
Bereitstellen einer Lenkanordnung (18) mit einem Paar von Steuerhebeln (20), die betriebsmäßig mit einem Paar von Getrieben (22) verbunden sind, wobei jedes Getriebe (22) eine sich davon erstreckende Abtriebswelle (34, 36) aufweist, an der ein Antriebsrad (16a) befestigt ist, und die Bewegung jedes der Steuerhebel (20) das entsprechende Getriebe (22) steuert;
Messen mindestens einer Eigenschaft jeder der Abtriebswellen (34, 36) des Paares von Getrieben (22) ;
Bereitstellen einer Systemsteuervorrichtung (30) zum Berechnen einer gelenkten Gesamtrichtung basierend auf der gemessenen Eigenschaft jeder der Abtriebswellen (34, 36);
Erzeugen eines Ausgangssignals aus der Systemsteuervorrichtung (30); und
Lenken mindestens eines gelenkten Rades (16b) in die gelenkte Gesamtrichtung als Reaktion auf das Ausgangssignal aus der Systemsteuervorrichtung (30) .

8. Verfahren nach Anspruch 7, wobei die gemessene Eigenschaft jeder der Abtriebswellen (34, 36) eine Drehzahl und/oder eine Drehrichtung der Abtriebswelle (34, 36) umfasst.

9. Verfahren nach Anspruch 7 oder 8, wobei jedes Getriebe des Paares von Getrieben (22) ein hydrostatisches Getriebe oder ein elektrisch angetriebenes Getriebe ist.

## Revendications

1. Véhicule d'entretien, comprenant :
un châssis (14) ;
un mécanisme de direction comprenant :
une paire de leviers de commande (20) connectés de manière opérationnelle audit châssis (14) ;
une paire de transmissions (22), chaque transmission (22) étant reliée de manière opérationnelle à l'un de ladite paire de leviers de commande (20), chacune desdites transmissions (22) présentant un arbre de sortie (34, 36) qui est connecté à une roue motrice (16a), ladite paire de leviers de commande (20) commandant directement lesdites transmissions (22) ;
un premier capteur (26) et un deuxième capteur (28), ledit premier capteur (26) étant connecté à un premier arbre de sortie (34) et ledit deuxième capteur (28) étant connecté à un deuxième arbre de sortie (36), chacun desdits premier et deuxième capteurs (26, 28) mesurant au moins une caractéristique dudit arbre de sortie correspondant (34, 36), chacun desdits capteurs (26, 28) générant un premier signal de sortie représentant ladite au moins une caractéristique mesurée ;
un contrôleur de système (30) connecté de manière opérationnelle auxdits premier et deuxième capteurs (26, 28) pour recevoir lesdits premiers signaux de sortie provenant de ceux-ci, ledit contrôleur de système (30) étant configuré pour calculer une direction dirigée globale et pour générer au moins un deuxième signal de sortie ;
au moins un ensemble de roues dirigées (17) connecté de manière opérationnelle audit châssis (14), chacun dudit au moins un ensemble de roues dirigées (17) comportant au moins une roue dirigée (16b) ; et
au moins un contrôleur de direction (32) connecté de manière opérationnelle audit contrôleur de système (30), ledit au moins un contrôleur de direction (32) recevant l'un dudit au moins un deuxième signal de sortie dudit contrôleur de système (30), ledit contrôleur de direction (32) faisant tourner de manière opérationnelle au moins un ensemble de roues dirigées (17) en réponse audit au moins un deuxième signal de sortie provenant dudit contrôleur de système (30) pour diriger ledit au moins un ensemble de roues dirigées (17) dans ladite direction dirigée globale.

2. Véhicule d'entretien selon la revendication 1, dans lequel ladite caractéristique mesurée par chacun desdits premier et deuxième capteurs (26, 28) comprend à la fois une vitesse de rotation et une direction de rotation dudit arbre de sortie (34, 36) s'étendant entre l'une desdites transmissions (22) et l'une desdites roues de traction (16a) rattachées à celle-ci.

3. Véhicule d'entretien selon la revendication 1 ou 2, comprenant en outre un dispositif de conduite (38) connecté de manière opérationnelle audit contrôleur de direction (32) et audit ensemble de roues dirigées (17), ledit dispositif de conduite (38) étant commandé par ledit contrôleur de direction (32) pour faire tourner ledit ensemble de roues dirigées (17) en réponse audit deuxième signal de sortie reçu par ledit contrôleur de direction (32).

4. Véhicule d'entretien selon la revendication 3, dans lequel ledit au moins un dispositif de conduite (38) comprend un moteur rattaché audit ensemble de roues dirigées (17) pour diriger ladite au moins une roue dirigée (16b).

5. Véhicule d'entretien selon la revendication 3, dans lequel un ensemble de roues dirigées (17) est rattaché à chaque extrémité d'un tirant (40) sur lequel est formé un engrenage à crémaillère, et ledit contrôleur de direction (32) est connecté de manière opérationnelle à un actionneur (42) qui comprend un pignon d'attaque qui est en prise d'engrènement avec ledit engrenage à crémaillère dudit tirant (40), ledit tirant pouvant être latéralement déplacé par translation par ledit actionneur (42) en réponse audit au moins un deuxième signal de sortie provenant dudit contrôleur de système (30).

6. Véhicule d'entretien selon l'une quelconque des revendications précédentes, dans lequel chacune de ladite paire de transmissions (22) est une transmission hydrostatique ou une transmission à commande électrique.

7. Procédé permettant de diriger un véhicule d'entretien, comprenant les étapes consistant à :
prévoir un ensemble de direction (18) ayant une paire de leviers de commande (20) connectée de manière opérationnelle à une paire de transmissions (22), chaque transmission (22) présentant un arbre de sortie (34, 36) s'étendant à partir de celle-ci et à laquelle est rattachée une roue motrice (16a), et un mouvement de chacun desdits leviers de commande (20) commandant ladite transmission (22) correspondante ;
mesurer au moins une caractéristique de chacun desdits arbres de sortie (34, 36) de ladite paire de transmissions (22) ;
prévoir un contrôleur de système (30) pour calculer une direction dirigée globale sur la base de ladite caractéristique mesurée de chacun desdits arbres de sortie (34, 36) ;
générer un signal de sortie provenant dudit contrôleur de système (30) ; et
diriger au moins une roue dirigée (16b) dans ladite direction dirigée globale en réponse audit signal de sortie provenant dudit contrôleur de système (30) .

8. Procédé selon la revendication 7, dans lequel ladite caractéristique mesurée de chacun desdits arbres de sortie (34, 36) comprend une vitesse de rotation et/ou une direction de rotation dudit arbre de sortie (34, 36).

9. Procédé selon la revendication 7 ou 8, dans lequel chacune de ladite paire de transmissions (22) est une transmission hydrostatique ou une transmission à commande électrique.
